# EUROPÄISCHE PATENTSCHRIFT

(11) **EP 0 714 798 B1**
(45) Veröffentlichungstag und Bekanntmachung des Hinweises auf die Patenterteilung: **18.03.1998**
(21) Anmeldenummer: 95116863.2
(22) Anmeldetag: 26.10.1995
(51) Int. Cl.: B60H 3/06

(54) **Vorrichtung zur Filterung eines Luftstromes, insbesondere für eine Heiz- bzw. Klimaanlage in einem Kraftfahrzeug**
Device for filtering an air current, particularly for a vehicle heating or air conditioning system
Dispositif pour filtrer un courant d'air, en particulier pour appareil de chauffage ou de climatisation dans une voiture autmobile

(30) Priorität: 01.12.1994 DE 4442851
(43) Veröffentlichungstag der Anmeldung: 05.06.1996
(73) Patentinhaber: Valeo Klimasysteme GmbH, 96476 Rodach (DE)
(72) Erfinder: Derx, Siegfried, D-96571 Lichtenfels (DE)
(74) Vertreter: COHAUSZ HASE DAWIDOWICZ & PARTNER

(56) Entgegenhaltungen:
- EP-A- 0 183 937
- DE-A- 4 123 448
- DE-C- 3 727 672
- US-A- 5 085 266

## Beschreibung

Die Erfindung bezieht sich auf eine Vorrichtung zur Filterung eines Luftstromes, insbesondere für eine Heiz- bzw. Klimaanlage in einem Kraftfahrzeug gemäß Anspruch 1.

Durch die DE-A1-41 23 448 ist eine Vorrichtung zur Filtration eines Luftstromes, insbesondere für ein Kraftfahrzeug bekannt, bei der zwei plattenförmige Filterteile durch eine schwenkbare Lagerung an ihrem einen Ende in eine V-förmige Aktivstellung einschwenkbar und aus dieser in eine parallel mit ihrer Außenseite an der Innenwandung des die Vorrichtung aufnehmenden Gehäuses derart zurückschwenkbar sind, daß der Luftstrom ungefiltert zwischen den Innenwandungen der Filterplatten direkt durchströmen kann.

Gemäß Aufgabe vorliegender Erfindung soll eine Vorrichtung zur Filterung eines Luftstromes, insbesondere in einer Heiz- bzw. Klimaanlage eines Kraftfahrzeuges, geschaffen werden, die bei einfacher Einstellbarkeit einerseits eine vollkommene Filterung der in das Fahrzeug geförderten Luft gewährleisten jedoch andererseits ohne Strömungsverluste kurzzeitig auch den vollen Luftstrom ohne Luftleistungsverluste aufgrund von Strömungswiderständen der Filteranordnungen zur maximalen Kühlung bzw. Erwärmung zur Verfügung stellen kann. Die Lösung dieser Aufgabe gelingt erfindungsgemäß durch eine Vorrichtung gemäß Anspruch 1; vorteilhafte Ausgestaltungen der Erfindung sind jeweils Gegenstand der Unteransprüche.

Die erfindungsgemäße Vorrichtung erlaubt einerseits bei kompakter Bauform und einfacher Verstellbarkeit eine vollkommene Filterung mittels eines ersten Luftkanals einer Aktivkohle-Filteranordnung und eines zweiten Luftkanals einer Partikel-Filteranordnung, wobei andererseits lediglich durch Betätigung einer Absperrvorrichtung bzw. durch ein Verschwenken der einen Filterwandteile entweder nur einer der Filter wirksam und damit der Durchströmungswiderstand schon wesentlich reduzierbar ist oder der Luftstrom ohne zwangsweise Führung durch beide Filteranordnungen frei durchströmbar ist, dabei jedoch mit einem geringen Anteil diese Filter gleichzeitig durchströmt und damit einem Festsetzen von Schmutz jeglicher Art in den aus ihrer Aktivstellung gebrachten Filterwänden entgegenwirkt.

Die Luftkanäle werden vorzugsweise jeweils aus plattenförmigen, leicht austauschbaren ersten Filter-Wandteilen bzw. zweiten Filter-Wandteilen und zwischen diesen liegenden seitlichen Wandteilen des die Vorrichtung zur Filterung aufnehmenden Gehäuses gebildet.

Die schwenkbaren zweiten Filter-Wandteile sind zweckmäßigerweise derart angeordnet, daß selbst bei deren Öffnung, d.h. Inaktivstellung, der Luftstrom durch die zweiten Filter-Wandteile durchströmen und somit Partikel aus dem Luftstrom ausgefiltert werden bevor sie in die Aktivfilteranordnung eintreten können. Andererseits ist es auf einfache Weise durch Öffnen der Absperrichtung einerseits und dem Einschwenken der zweiten Filter-Wandteile in ihrer Aktivstellung möglich, den Luftstrom mit verringerten Strömungsverlusten nur durch die Partikel-Filteranordnung hindurchströmen zu lassen.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: in einem Längsschnitt eine erste Vorrichtung mit aktiver Aktivkohle-Filtervorrichtung und aktiver Partikel-Filteranordnung;
- FIG 2: die Anordnung gemäß FIG 1 mit lediglich aktiver Partikel-Filteranordnung;
- FIG 3: die Anordnung gemäß FIG 1 mit sowohl inaktiver Aktivkohle-Filteranordnung als auch inaktiver Partikel-Filteranordnung.

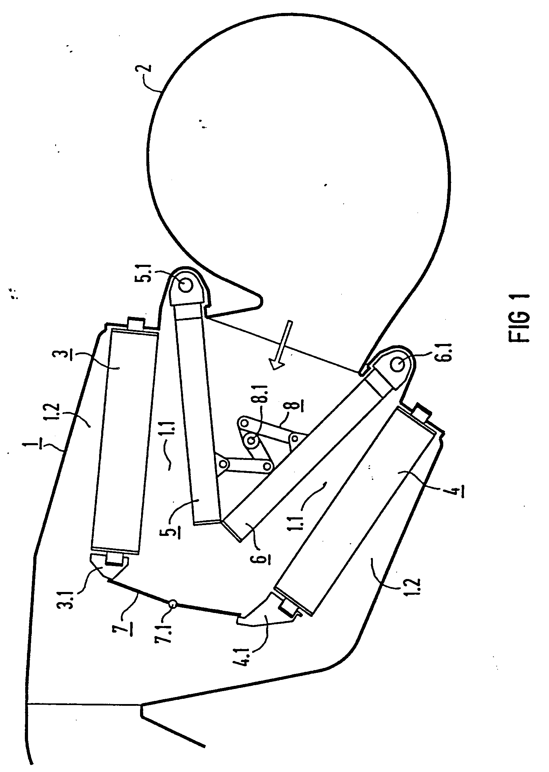

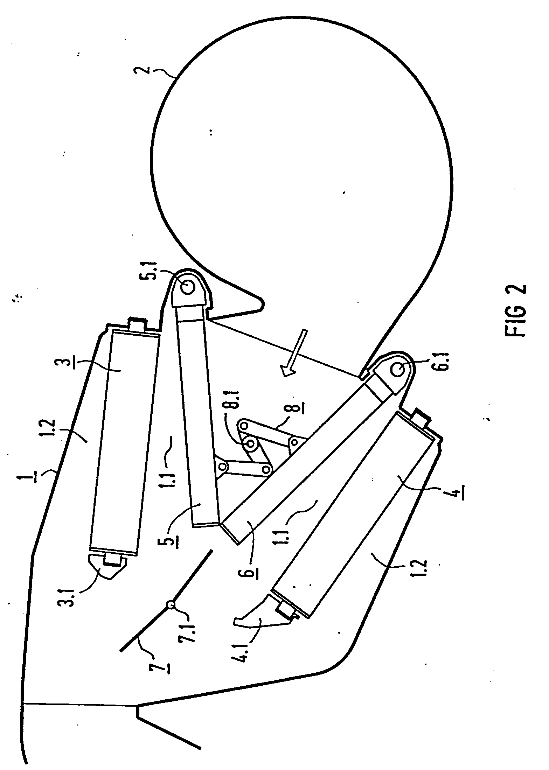

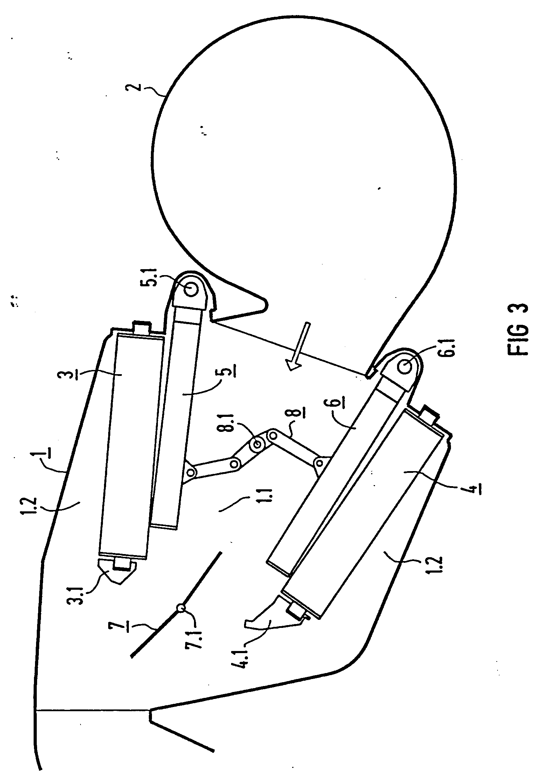

FIG 1-3 zeigen in einem schematischen Längsschnitt das Gehäuse 1 einer Heiz- bzw. Klimaanlage mit strömungseingangsseitigem Lüftergehäuse 2, wie es z.B. Anwendung für eine Heiz- bzw. Klimaanlage in einem Kraftfahrzeug Verwendung finden kann. Zur Filterung des gemäß dem eingezeichneten Strömungspfeil aus dem Lüftergehäuse 2 geförderten Luftstromes sind eine äußere Aktivkohle-Filteranordnung mit plattenförmigen, leicht austauschbaren Filterwandteilen 3;4 und eine innere Partikel-Filteranordnung mit ebenfalls plattenförmigen, leicht austauschbaren Filter-Wandteilen 5;6 vorgesehen. Die Filterwandteile 3;4 der Aktivkohle-Filteranordnung sind fest eingebaut. Die Filter-Wandteile 5;6 der Partikel-Filteranordnung sind um eine Schwenklagerung 5.1;6.1 in der Nähe der lufteintrittsseitigen Enden der Filter-Wandteile 3;4 der Aktivkohle-Filteranordnung schwenkbar gelagert und über ein um eine Schwenklagerung 8.1 schwenkbares Kniehebelwerk 8 aus ihrer Aktivstellung gemäß FIG 1 bzw. FIG 2 in ihre Inaktivstellung gemäß FIG 3 derart zurückschwenkbar, daß sie im wesentlichen parallel zur Eintrittsseite der Filter-Wandteile 3;4 der Aktivkohle-Filteranordnung verlaufen und deren Eintrittsseite über ihren wesentlichen Teil abdecken; dadurch wird erreicht, daß auch in der Öffnungsstellung der Partikel-Filteranordnung die in die Filter-Wandteile 3;4 der Aktivkohle-Filteranordnung eintretende Luft zumindest in ihrem wesentlichen Teil die Filter-Wandteile 5;6 der Partikel-Filteranordnung durchströmen.

Der Wechsel zwischen einer Inaktivstellung einerseits und einer Aktivstellung andererseits der Filter-Wandteile 3;4 der Aktivkohle-Filteranordnung wird auf einfache Weise durch eine Absperrvorrichtung an der Austrittsseite der Aktivkohle-Filteranordnung in Form einer um eine Schwenklagerung 7.1 schwenkbaren Sperrklappe 7 erreicht, die in FIG 1 in ihrer Sperrstellung mit endseitiger Anlage an Anschlägen 3.1;4.1 der ersten Filterwandteile 3;4 und in FIG 2,3 in ihrer Öffnungsstellung dargestellt ist. In der Sperrstellung gemäß FIG 1 wird erreicht, daß der gesamte vom Lüftergehäuse 2 her eintretende Luftstrom durch die Filter-Wandteile 3;4 der Aktivkohle-Filteranordnung durchtritt; in der Öffnungsstellung der Sperrklappe 7 gemäß FIG 2 kann zumindest der wesentliche Teil des gesamten Luftstromes nach zwangsweiser Durchströmung der in Aktivstellung geschwenkten Filter-Wandteile 5;6 der Partikel-Filteranordnung der wesentliche Teil des Luftstroms ohne zwangsweise Durchströmung der Filter-Wandteile 3;4 der Aktivkohle-Filteranordnung direkt ausströmen.

Beim Ausführungsbeispiel gemäß FIG 3 kann der vom Lüftergehäuse 2 eintretende Luftstrom, zumindest in seinem wesentlichen Teil, auch die Partikel-Filteranordnung ohne Strömungshindernis direkt durchströmen; jedoch wird ein Teil der vom Lüfterhäuse 2 eintretenden Luft, insbesondere bei den dargestellten, in V-Form düsenförmig angeordneten Filter-Wandteilen 3;4 und den dazu parallelen Filter-Wandteilen 5;6 der Partikel-Filteranordnung sowohl durch die geöffneten Filter-Wandteile 5;6 der Partikel-Filteranordnung als auch durch die nachgeschalteten Filter-Wandteile 3;4 der Aktivkohle-Filteranordnung hindurchtreten.

Nach einer Ausgestaltung der Erfindung werden der innere Luftkanal bzw. der äußere Luftkanal jeweils durch die beiden Filter-Wandteile 3;4 bzw. 5;6 und die an diesen seitlich, zumindest in ihren Endstellungen, dicht anschließenden Wandteile 1.1 des Gehäuses 1 gebildet. Die Filter-Wandteile 3;4 der Aktivkohle-Filteranordnung sind derart im Gehäuse 1 eingebaut, daß oberhalb der Filter-Wandteile 3;4 an deren Austrittsseiten, vorzugsweise sich düsenförmig im Sinne des Luftströmungsaufbaus erweiternde bzw. verjüngende Luftabführungskanäle 1.2 ergeben.

## Patentansprüche

1. Vorrichtung zur Filterung eines Luftstromes, insbesondere für eine Heiz- bzw. Klimaanlage in einem Kraftfahrzeug, mit einem ortsfeste erste Filter-Wandteile (3;4) einer Aktivkohle-Filteranordnung enthaltenden, äußeren Luftkanal und mit einem von diesem umfaßten, zweite zwischen einer Öffnungsstellung im wesentlich parallel zu den ersten Filter-Wandteilen (3;4) einerseits und einer Schließstellung andererseits verschwenkbare zweite Filter-Wandteile (5;6) einer Partikel-Filteranordnung enthaltenden, inneren Luftkanal sowie mit einer Absperrvorrichtung (7) am Ausgang des äußeren Luftkanals, derart daß in deren Sperrstellung der gesamte Luftstrom zumindest durch die ersten Wandteile (3;4) gefördert ist.

2. Vorrichtung nach Anspruch 1 mit einem äußeren bzw. einem inneren Luftkanal, die jeweils aus seitlichen Wandteilen (1.1) des Gehäuses (1) der Heiz- bzw. Klimaanlage und diese verbindenden, vorzugsweise plattenförmigen und austauschbaren, ersten Filter-Wandteilen (3;4) bzw. zweiten Filter-Wandteilen (5;6) gebildet sind.

3. Vorrichtung nach zumindest einem der Ansprüche 1 und/oder 2 mit einer Schließstellung der zweiten Filter-Wandteile (5;6) des inneren Luftkanals, derart daß der gesamte Luftstrom durch die zweiten Filter-Wandteile (5;6) in den äußeren Luftkanal gefördert ist.

4. Vorrichtung nach zumindest einem der Ansprüche 1-3 mit einer Öffnungsstellung der zweiten Filter-Wandteile (5;6) des inneren Luftkanals, derart daß der durch die ersten Filter-Wandteile (3;4) durchströmende Luftstrom, zumindest in seinem wesentlichen Anteil, auch die zweiten Filter-Wandteile (5;6) durchströmt.

5. Vorrichtung nach zumindest einem der Ansprüche 1-4 mit im Bereich der Einströmseite des Luftstroms in den äußeren bzw. inneren Luftkanal und in Nähe zu den ersten Filter-Wandteilen (3;4) angeordneten Schwenklagerungen (5.1;6.1) der zweiten Filter-Wandteile (5;6).

6. Vorrichtung nach zumindest einem der Ansprüche 1-5 mit im Sinne eines jeweils düsenförmigen Luftkanals V-förmig angeordneten ersten Filter-Wandteilen (3;4) bzw. zweiten Filter-Wandteilen (5;6).

7. Vorrichtung nach zumindest einem der Ansprüch 1-6 mit einem gehäuseseitigen, den äußeren Luftkanal übergreifenden Luftabführungskanal (1.2) bzw. Luftzuführungskanal.

8. Vorrichtung nach zumindest einem der Ansprüche 1-7 mit an dem der Düsenspitze abgewandten Ende des äußeren bzw. inneren Luftkanals in diesen einströmendem Luftstrom.

9. Vorrichtung nach zumindest einem der Ansprüche 1-8 mit einem um eine Achse (7.1) zwischen einer Sperrstellung einerseits und einer Öffnungsstellung andererseits schwenkbaren Sperrklappe (7) als Absperrvorrichtung für den äußeren Luftkanal.

10. Vorrichtung nach zumindest einem der Ansprüche 1-9 mit an seiner Düsenspitze durch Verschwenken seiner zweiten Filter-Wandteile (5;6) verschließbaren inneren Luftkanal.

## Claims

1. Device for filtering an air stream, in particular for a heating system or air conditioning system in a motor vehicle, having an outer air duct containing positionally fixed first filter wall parts (3; 4) of an active carbon filter arrangement, and having an inner air duct encompassed by the outer air duct containing second filter wall parts (5; 6) of a particle filter arrangement, which wall parts can be swivelled between an open position essentially parallel to the first filter wall parts (3; 4), on the one hand, and a closed position, on the other hand, and also having a shutoff device (7) at the outlet of the outer air duct which is such that, in its barrier position, the entire air stream is conveyed at least through the first wall parts (3; 4).

2. Device according to Claim 1 having an outer air duct or an inner air duct, respectively, which are each formed from lateral wall parts (1.1) of the housing (1) of the heating system or air conditioning system and preferably plate-type and exchangeable first filter wall parts (3; 4) or second filter wall parts (5; 6) which connect said heating system or air conditioning system.

3. Device according to at least one of Claims 1 and/or 2, having a closed position of the second filter wall parts (5; 6) of the inner air duct which is such that the entire air stream is conveyed through the second filter wall parts (5; 6) into the outer air duct.

4. Device according to at least one of Claims 1 - 3, having an open position of the second filter wall parts (5; 6) of the inner air duct which is such that the air stream flowing through the first filter wall parts (3; 4) flows, at least in its essential component, also through the second filter wall parts (5; 6).

5. Device according to at least one of Claims 1 - 4, having swivel bearings (5.1; 6.1) of the second filter wall parts (5; 6), which swivel bearings are disposed in the region of the inflow side of the air stream into the outer or inner air duct and in the vicinity of the first filter wall parts (3; 4).

6. Device according to at least one of Claims 1 - 5, having first filter wall parts (3; 4) or second filter wall parts (5; 6) disposed in a V-shaped manner in the fashion of an air duct which is nozzle-shaped in each case.

7. Device according to at least one of Claims 1 - 6, having a housing-side air removal duct (1.2) or air supply duct which fits over the outer air duct.

8. Device according to at least one of Claims 1 - 7, having an air stream flowing into the outer or inner air duct at that end of the outer or inner air duct, respectively, which is remote from the nozzle tip.

9. Device according to at least one of Claims 1 - 8, having a shutoff valve (7) which can be swivelled around an axis (7.1) between a shutoff position, on the one hand, and an open position, on the other hand, as shutoff device for the outer air duct.

10. Device according to at least one of Claims 1 - 9, having an inner air duct which can be closed at its nozzle tip by swivelling its second filter wall parts (5; 6).

## Revendications

1. Appareil de filtration d'un courant d'air, en particulier pour une installation de chauffage ou de climatisation de véhicule automobile, comportant une voie d'air extérieure contenant des premières parties de paroi filtrantes fixes (3, 4) d'un dispositif de filtration à charbon actif, une voie d'air intérieure enveloppée par celle-ci et comportant des deuxièmes parties de paroi filtrantes (5 ; 6) d'un dispositif de filtration à particules qui peuvent tourner entre une position ouverte où elles sont sensiblement parallèles aux premières parties de paroi filtrantes (3 ; 4) et une position fermée, et un dispositif d'arrêt (7) placé à la sortie de la voie d'air extérieure, de telle façon que lorsqu'il est fermé, le courant d'air entier traverse au moins les premières parties de paroi (3 ; 4).

2. Appareil selon la revendication 1 comportant une voie d'air extérieure et une voie d'air intérieure qui sont formées chacune de parties de paroi latérales (1.1) de l'enveloppe (1) de l'installation de chauffage ou de climatisation et de premières parties de paroi filtrantes (3 ; 4) ou de deuxièmes parties de paroi filtrantes (5 ; 6) de préférence en forme de plaques et remplaçables qui réunissent les parties de paroi latérales (1.1).

3. Appareil selon au moins une des revendications 1 et 2 ayant une position fermée des deuxièmes parties de paroi filtrantes (5 ; 6) de la voie d'air intérieure, de telle façon que le courant d'air entier traverse les deuxièmes parties de paroi filtrantes (5 ; 6) pour aller dans la voie d'air extérieure.

4. Appareil selon au moins une des revendications 1 à 3 ayant une position ouverte des deuxièmes parties de paroi filtrantes (5 ; 6) de la voie d'air intérieure, de telle façon que le courant d'air qui traverse les premières parties de paroi filtrantes (3 ; 4), au moins en majeure partie, traverse aussi les deuxièmes parties de paroi filtrantes 5 ; 6).

5. Appareil selon au moins une des revendications 1 à 4 comportant des axes de rotation (5.1, 6.1) pour les deuxièmes parties de paroi filtrantes (5 ; 6) placés dans la zone du côté entrée du courant d'air dans la voie d'air extérieure ou intérieure et à proximité des premières parties de paroi filtrantes (3 ; 4).

6. Appareil selon au moins une des revendications 1 à 5 comportant des premières parties de paroi filtrantes (3 ; 4) et des deuxièmes parties de paroi filtrantes (5 ; 6) disposées respectivement en V dans le sens d'une voie d'air en forme de tuyère.

7. Appareil selon au moins une des revendications 1 à 6 comportant une voie d'évacuation d'air (1 ; 2) ou voie d'arrivée d'air côté enveloppe qui enveloppe la voie d'air extérieure.

8. Appareil selon au moins une des revendications 1 à 7 avec courant d'air entrant dans la voie d'air extérieure ou intérieure à l'extrémité de celle-ci opposée à la pointe de la tuyère.

9. Appareil selon au moins une des revendications 1 à 8 comportant un papillon (7) tournant autour d'un axe (7.1) entre une position fermée et une position ouverte et servant de dispositif d'arrêt pour la voie d'air extérieure.

10. Appareil selon au moins une des revendications 1 à 9 comportant une voie d'air intérieure pouvant être fermée à sa pointe de tuyère par rotation de ses deuxièmes parties de paroi filtrantes (5 ; 6).
